Europäisches Patentamt

European Patent Office

Office européen des brevets

(19)

(11) Numéro de publication: **0 098 217**
**A2**

(12) **DEMANDE DE BREVET EUROPEEN**

(21) Numéro de dépôt: **83401308.8**

(22) Date de dépôt: **23.06.83**

(51) Int. Cl.³: **F 28 F 11/00**
**F 28 F 7/00, B 01 D 46/10**

(30) Priorité: **25.06.82 FR 8211221**

(43) Date de publication de la demande:
**11.01.84 Bulletin 84/2**

(84) Etats contractants désignés:
**DE GB IT NL**

(71) Demandeur: **COMMISSARIAT A L'ENERGIE ATOMIQUE**
**Etablissement de Caractère Scientifique Technique et**
**Industriel**
**31/33, rue de la Fédération**
**F-75015 Paris(FR)**

(72) Inventeur: **Schnedecker, Guy**
**38, rue Ginoux**
**F-75015 Paris(FR)**

(72) Inventeur: **Mougin, Jacques**
**7, rue du Bon Puits**
**F-91320 Wissous(FR)**

(74) Mandataire: **Mongrédien, André et al,**
**c/o BREVATOME 25, rue de Ponthieu**
**F-75008 Paris(FR)**

(54) Procédé d'obturation sélective des extrémités d'un module alvéolaire et module obtenu par ce procédé.

(57) La présente invention a pour objet un procédé d'obtura-tion sélective d'au moins une extrémité (11) d'un module alvéolaire (13), ce dernier comprenant des rangées de canaux parallèles destinés à véhiculer au moins deux fluides différents.

Ce procédé consiste, de manière connue, à déposer un matériau étanche (17) sur l'extrémité à obturer (11) du module, mais le dépôt est précédé d'une opération de précolmatage à l'aide d'un matériau (15) qui ne contribue pas à assurer l'étanchéité mais sert de support mécanique lors du dépôt du matériau d'obturation (17).

Application aux échangeurs de chaleur.

FIG. 4ₐ

EP 0 098 217 A2

La présente invention a pour objet un procédé d'obturation d'au moins une extrémité d'un module alvéolaire ainsi qu'un module dont l'obturation a été réalisée par ce procédé.

De nombreuses applications industrielles utilisent des modules alvéolaires comportant des rangées de canaux dans lesquels circulent au moins deux fluides différents. On rencontre de tels dispositifs notamment dans des échangeurs de chaleur ou des installations d'ultra-filtration. Etant donné que ces modules permettent de véhiculer des fluides différents, il est nécessaire d'obturer sélectivement leurs extrémités afin de permettre la séparation des fluides. Divers procédés d'obturation ont été proposés à ce jour mais les solutions sont souvent compliquées et coûteuses.

Une solution a été proposée dans le brevet français 79 21542 du 28 août 1979, appartenant au déposant. Sur la figure 1 de la présente demande, qui illustre ce procédé, on voit un module alvéolaire portant la référence générale 1 et comportant d'une part des rangées 2 de canaux individuels 4 dans lesquels circule un premier fluide et d'autre part des rangées 6 de canaux 8 dans lesquels circule un deuxième fluide. Selon ce procédé, on réalise d'abord par usinage des encoches 10 aux extrémités des rangées 6 puis on dépose un matériau étanche d'obturation 12 sur toute la surface de l'extrémité à obturer du module 1. Le matériau d'obturation ne pénétrant que partiellement à l'intérieur des canaux et restant pour l'essentiel en surface, on obtient une obturation complète des canaux 4 appartenant aux rangées 2 tandis que le fluide circulant dans les canaux 8 des rangées 6 peut sortir latéralement par les encoches 10.

La présente invention a pour objet un procédé d'obturation d'une extrémité d'un module alvéolaire qui élimine toute opération d'usinage préalable et se démarque donc du brevet précédent.

D'autre part l'admission des fluides dans les canaux dont les extrémités restent libres s'effectue frontalement et non plus latéralement, configuration qui occasionnait des pertes de charges importantes. Cette invention permet aussi d'obtenir n'importe quelle géométrie d'obturation.

La principale caractéristique du procédé objet de l'invention est que le dépôt du matériau d'obturation est précédé d'une opération de précolmatage consistant à colmater les canaux devant être obturés à l'aide d'un matériau de précolmatage uniquement destiné à servir de support mécanique pendant le dépôt du matériau d'obturation. C'est au niveau du précolmatage que la configuration géométrique désirée est choisie.

Selon un premier mode de mise en oeuvre, le matériau de précolmatage se présente sous la forme d'une poudre sèche et l'opération de précolmatage comporte les étapes suivantes :

- on colmate tous les canaux débouchant sur l'extrémité à obturer du module avec le matériau de précolmatage,

- on applique une grille sur l'une des extrémités du module, la géométrie de cette grille étant telle qu'elle présente des ouvertures correspondant aux rangées de canaux devant rester ouverts, et

- on insuffle un gaz comprimé dans les canaux du module afin d'éliminer le matériau de précolmatage se trouvant dans les canaux devant rester ouverts.

Selon un autre mode de réalisation de ce procédé, le matériau de précolmatage se présente sous forme de pâte visqueuse et il est déposé par sérigraphie ou une méthode analogue.

Dans certains cas, il peut être utile de fai-

B 7408.3 JR

re suivre l'opération de précolmatage d'un traitement thermique de consolidation du matériau de précolmatage.

Il peut également s'avérer nécessaire, avant le dépôt du matériau d'obturation, de soumettre la face précolmatée du module à une opération d'usinage ou de dressage afin d'améliorer l'état de surface frontale des canaux colmatés.

Le dépôt du matériau étanche d'obturation se fait généralement par projection à haute température, le module étant animé d'un mouvement de rotation autour d'un axe parallèle à la direction définie par les canaux.

L'angle de projection du matériau étanche d'obturation par rapport à la direction définie par les canaux est de l'ordre de 40 à 50°, et de préférence voisin de 45°, et la projection peut se faire de manière alternative, un disque animé d'un mouvement de rotation et comportant au moins une encoche étant placé devant l'extrémité à obturer du module alvéolaire.

Quant au matériau de précolmatage, il peut soit subsister, soit être éliminé, après dépôt du matériau d'obturation.

Enfin, l'invention a également pour objet un module alvéolaire dont au moins une des extrémités a été obturée sélectivement par le procédé qui vient d'être défini.

D'autres caractéristiques et avantages de l'invention ressortiront de la description qui va suivre, donnée à titre d'exemple purement illustratif et nullement limitatif, en référence aux dessins annexés dans lesquels :

- la figure 1, déjà décrite, est une vue en perspective, avec arrachement partiel, d'une extrémité d'un module alvéolaire obturé selon un procédé de l'art antérieur,

- la figure 2 est une vue en perspective d'une extrémité d'un module alvéolaire à obturer,

- la figure 3 est une vue schématique en coupe illustrant une extrémité du module précolmaté,

- la figure 4a est une vue semblable à la figure 3 montrant l'extrémité du module après dépôt du matériau d'obturation,

- la figure 4b est une vue en perspective de l'extrémité obturée du module de la figure 4a, et

- la figure 5 est une vue schématique en perspective montrant comment on réalise le dépôt du matériau d'obturation par projection sur une extrémité du module,

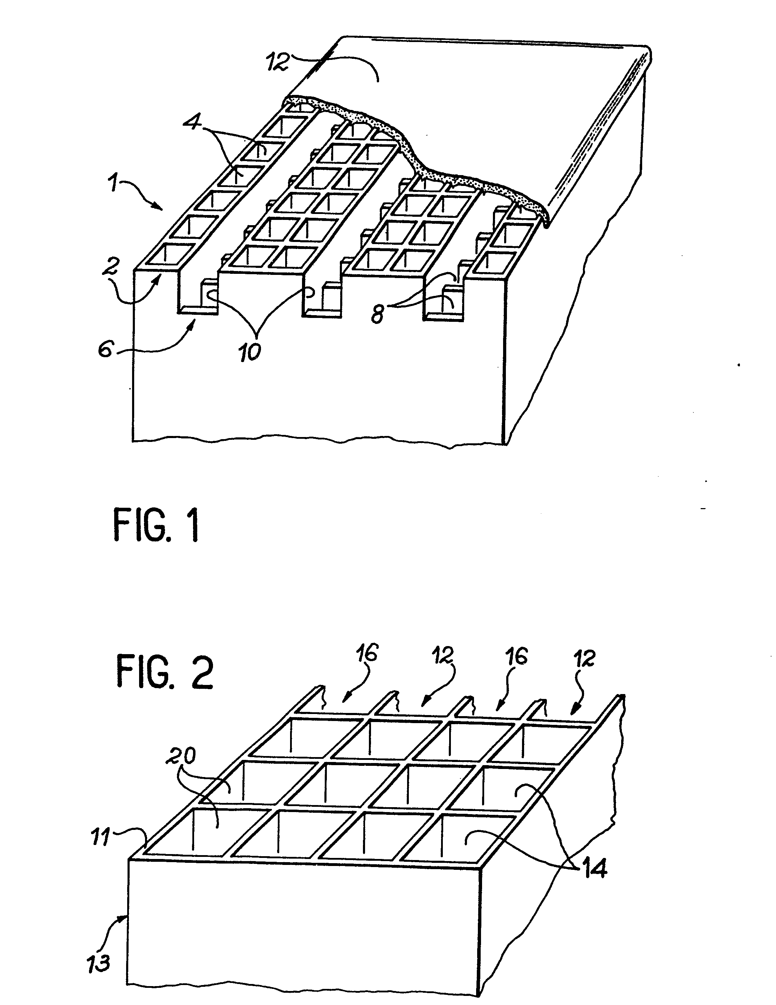

Sur la figure 2, on voit l'extrémité à obturer 11 du module 13 qui présente des rangées 12 de canaux 14 à obturer et des rangées 16 de canaux 20 devant rester ouverts. Les canaux peuvent avoir des sections carrées ou rectangulaires dont les côtés ont des longueurs de l'ordre du millimètre tandis que l'épaisseur des cloisons séparant les canaux est de l'ordre de 100 à 250 microns.

Dans un premier exemple, le matériau de précolmatage se présente sous la forme d'un mélange pulvérulent comprenant, en poids, 75% de poudre d'aluminium présentant une granulométrie moyenne de 45 microns et 25% de poudre de PFA (perfluoro-alkoxyle), cette dernière ayant de préférence une granulométrie inférieure à 100 microns. Ce mélange est préparé à sec au mortier puis introduit par simple bourrage dans les extrémités de tous les canaux débouchant sur la face à obturer du module.

L'étape suivante consiste à éliminer la poudre des canaux dont les extrémités doivent rester ouvertes. Pour cela, on applique une grille de configuration géométrique appropriée à l'extrémité du module opposée à l'extrémité à obturer 11. La géométrie de la grille est telle qu'elle bouche l'entrée des canaux 14 qui doivent être obturés et laisse libre l'entrée des canaux 20 qui doivent rester ouverts. Un courant gazeux, par exemple de l'azote comprimé sous une pression de quelques bars, est envoyé à travers le module par l'extrémité sur laquelle est appliquée la grille. Ceci a pour effet d'éliminer le matériau de précolmatage présent à l'extrémité des canaux qui doivent rester ouverts.

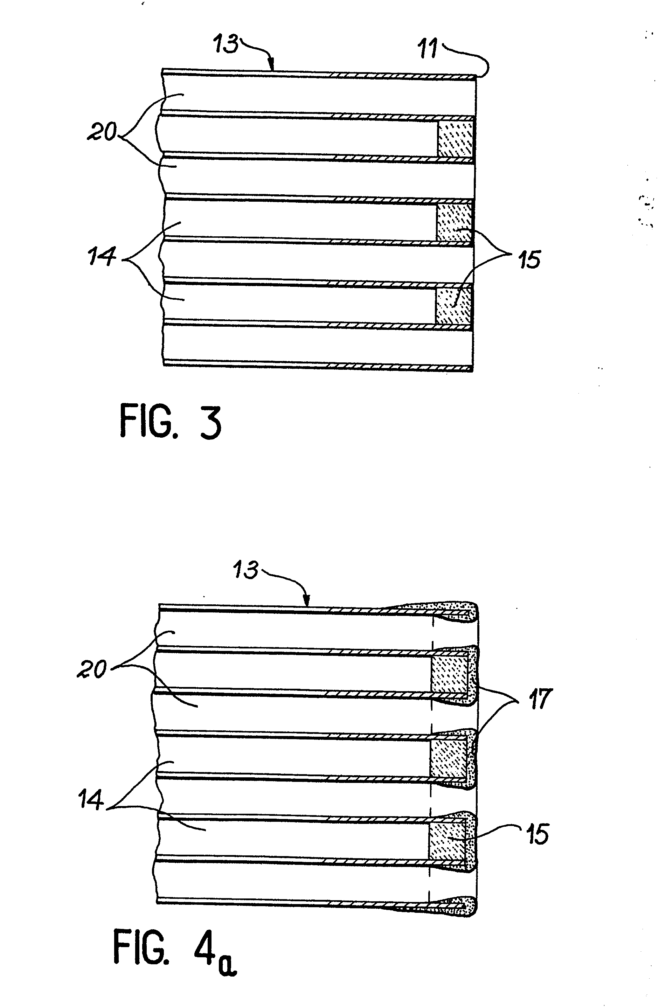

Le matériau de précolmatage devant jouer le rôle d'un support mécanique lors du dépôt ultérieur du matériau d'obturation, il est nécessaire de le consolider par un traitement thermique approprié. Dans le cas du mélange de poudre d'aluminium et de PFA, ce dernier joue le rôle d'un liant et a une température de fusion de l'ordre de 310°C. C'est pourquoi on effectue un traitement thermique à une température légèrement supérieure à cette valeur, par exemple 320°C. Une première méthode consiste à introduire le module 13 dans un four que l'on chauffe progressivement à la vitesse de 100°C par heure, puis à observer, à la température de traitement, un palier d'une durée comprise entre 15 et 30 minutes, le tout étant suivi d'un retour lent à la température ambiante. Une autre méthode consiste à soumettre uniquement l'extrémité 11 du module 13 à un traitement thermique rapide par passage pendant 5 minutes dans un four préréglé à 340°C. Ces types de traitements thermiques ont été choisis afin de permettre une consolidation mécanique suffisante tout en limitant le retrait du au matériau plastique (un tel retrait pourrait entraîner des décollements locaux du matériau de colmatage vis-à-vis des parois du module ou même des fissurations). On arrive ainsi au résultat illustré sur la figure 3 où l'on voit le matériau de précolmatage 15 bouchant les extrémités des canaux tels que 14 tandis qu'il a été éliminé des extrémités des canaux 20.

B 7408. 3 JR

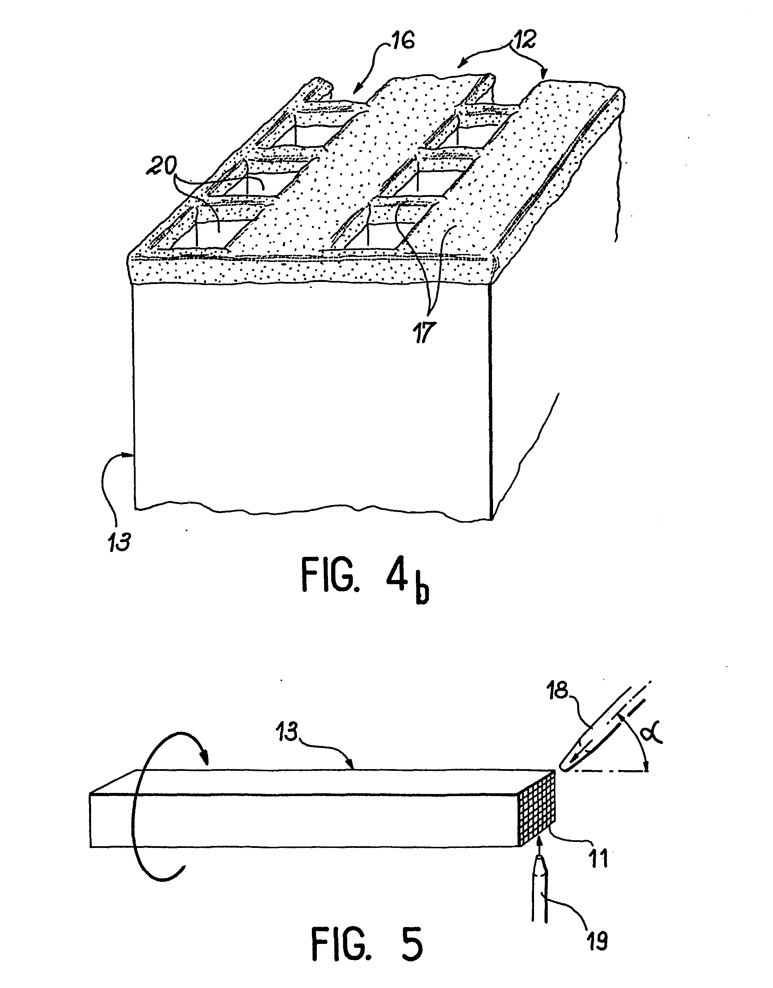

Les figures 4a et 4b illustrent le dépôt du matériau d'obturation une fois que le précolmatage a été réalisé. Si nécessaire, la face précolmatée du module a subi un dressage ou un rodage destiné à éliminer la surépaisseur du matériau de précolmatage ou tout simplement à obtenir une surface suffisamment plane. On dépose ensuite le matériau d'obturation 17 pour parvenir au résultat illustré sur les figures 4a et 4b. Dans l'exemple décrit ici, le matériau d'obturation est de l'aluminium de haute pureté déposé au pistolet oxyacétylénique.

La méthode de projection est illustrée à la figure 5. On voit que le module 1 est animé d'un mouvement de rotation autour d'un axe parallèle à la direction définie par les canaux tandis que le pistolet oxyacétylénique 18, alimenté par l'aluminium sous forme de fil, est disposé au voisinage de l'extrémité 11 du module et fait avec l'axe de rotation de celui-ci un angle α dont la valeur est comprise entre 40° et 50° et de préférence voisine de 45°. La distance entre l'extrémité du pistolet 18 et la face 11 du module est de l'ordre de 15 cm. Une buse 19 envoie de l'air comprimé pour éliminer en partie l'apport de calories dû au procédé de dépôt. Le dépôt du matériau d'obturation peut se faire en continu et, dans ce cas, la durée du dépôt est de l'ordre de 90 secondes pour que l'obturation partielle des canaux devant rester ouverts reste inférieure à 50%. En effet, on voit sur la figure 4b qu'au cours de la projection une partie du matériau de colmatage 17 a pénétré dans les canaux 20 et s'est déposée sur les extrémités des cloisons séparant ces canaux. Cependant, malgré cette diminution de la section, le fluide contenu dans les canaux 20 peut encore s'écouler dans des conditions satisfaisantes. On peut également réaliser une projection discontinue avec interposi-

B 7408.3 JR

tion, entre l'extrémité 11 du module et le pistolet 18, d'un disque tournant présentant une ou plusieurs encoches.

La durée du dépôt est plus longue avec cette deuxième méthode (de 3 à 6 mn), mais il est des cas où la fragilité du module est incompatible avec la technique de projection en continu.

Dans un deuxième exemple de réalisation, le précolmatage est réalisé avec un verre soluble afin de pouvoir éliminer celui-ci après dépôt du matériau d'obturation. On peut utiliser, par exemple, du silicate de soude mis en place dans les canaux à obturer par sérigraphie. Les éléments ainsi préobturés sont portés à 110°C pendant une heure dans une étuve, puis soumis à un refroidissement lent (refroidissement à l'air). On obtient ainsi un verre qui adhère parfaitement aux parois du module. On réalise ensuite un revêtement d'aluminium comme dans l'exemple précédent puis les éléments sont rincés à l'eau chaude, ce qui a pour effet d'éliminer le verre qui est soluble dans l'eau.

Dans un troisième exemple de réalisation, on procède au précolmatage comme dans les exemples précédents (mélange de poudre d'aluminium et de PFA ou utilisation d'un verre soluble) mais le revêtement déposé est de l'alumine. Dans ce cas, l'opération de projection est plus longue pour obtenir une épaisseur comparable à celle d'un dépôt d'aluminium et l'élévation de température plus importante. On utilise en conséquence la projection alternative avec interposition d'un disque fendu animé d'un mouvement de rotation à la vitesse de deux tours par minute. Pour une durée totale de projection de l'ordre de 8 mn, la qualité de l'obturation est comparable à celle obtenue avec les revêtements d'aluminium.

Dans un quatrième exemple le précolmatage est

B 7408.3 JR

fait avec des verres chargés par exemple d'alumine. Dans ce cas, le verre joue uniquement le rôle d'un liant et le dépôt dans les canaux est réalisé par sérigraphie. On effectue ensuite un traitement thermique de consolidation à une température qui peut varier entre 600 et 1100°C suivant la nature du verre utilisé et son point de fusion. Le dépôt du matériau d'obturation est ensuite effectué avec de l'aluminium ou de l'alumine comme illustré dans les exemples précédents.

B 7408.3 JR

REVENDICATIONS

1. Procédé d'obturation sélective d'au moins une extrémité (11) d'un module alvéolaire (13) comprenant des rangées (12, 16) de canaux parallèles (14, 20) destinés à véhiculer au moins deux fluides différents, du genre de ceux dans lesquels on dépose un matériau étanche d'obturation (17) sur ladite extrémité (11) du module (1), caractérisé en ce que le dépôt dudit matériau d'obturation (17) est précédé d'une opération de précolmatage consistant à colmater les canaux devant être obturés à l'aide d'un matériau de précolmatage (15) uniquement destiné à servir de support méccanique pendant le dépôt du matériau d'obturation (22).

2. Procédé selon la revendication 1, caractérisé en ce que le matériau de précolmatage (15) se présente sous la forme d'une poudre sèche.

3. Procédé selon la revendication 2, caractérisé en ce que l'opération de précolmatage comporte les étapes suivantes :
- on colmate tous les canaux débouchant sur l'extrémité à obturer (11) du module (13) avec le matériau de précolmatage (15),
- on applique une grille sur l'une des extrémités du module (13), la géométrie de cette grille étant telle qu'elle présente des ouvertures correspondant aux rangées de canaux devant rester ouverts, et
- on insuffle un gaz comprimé dans les canaux du module (13) afin d'éliminer le matériau de précolmatage se trouvant dans les canaux (20) devant rester ouverts.

4. Procédé selon la revendication 1, caractérisé en ce que le matériau de précolmatage se présente sous la forme d'une pâte visqueuse.

5. Procédé selon la revendication 4, caracté-

B 7408.3 JR

risé en ce que le matériau de précolmatage est appliqué sur l'extrémité à obturer (11) du module (13) par sérigraphie ou une méthode analogue.

6. Procédé selon l'une quelconque des revendications 1 à 5, caractérisé en ce que l'opération de précolmatage est suivie d'un traitement thermique de consolidation du matériau de précolmatage.

7. Procédé selon l'une quelconque des revendications 1 à 6, caractérisé en ce que l'opération de précolmatage est suivie d'un usinage de la face correspondante (11) du module alvéolaire (13).

8. Procédé selon l'une quelconque des revendications 1 à 7, caractérisé en ce que le matériau de précolmatage est éliminé après dépôt du matériau étanche d'obturation (17).

9. Procédé selon l'une quelconque des revendications 1 à 8, caractérisé en ce que le dépôt du matériau étanche d'obturation (17) se fait par projection à haute température.

10. Procédé selon la revendication 9, caractérisé en ce que, pendant la projection du matériau d'obturation (17), le module alvéolaire (13) est animé d'un mouvement de rotation autour d'un axe parallèle à la direction définie par les canaux (14, 20).

11. Procédé selon la revendication 10, caractérisé en ce que l'angle de projection du matériau étanche d'obturation (17) par rapport à la direction définie par les canaux (14, 20) est de l'ordre de 40 à 50° et de préférence voisin de 45°.

12. Procédé selon l'une quelconque des revendications 9 à 11, caractérisé en ce que la projection du matériau étanche d'obturation (17) se fait de manière alternative, un disque, animé d'un mouvement de rotation et comportant au moins une encoche étant placé devant l'extrémité à obturer (11) du module alvéolaire (13).

B 7408.3 JR

13. Module alvéolaire caractérisé en ce qu'au moins une de ses extrémités a été obturée par le procédé selon l'une quelconque des revendications 1 à 12.

FIG. 1

FIG. 2

FIG. 3

FIG. 4a

FIG. 4 b

FIG. 5